# EUROPEAN PATENT APPLICATION

(11) **EP 4 796 583 A1**
(43) Date of publication of application: **26.08.2026**
(21) Application number: 26152397.1
(22) Date of filing: 16.01.2026
(51) Int. Cl.: C08K 3/04, C08K 3/08, D01F 1/10, D01F 6/90, D01F 6/92

(54) **INFRARED RADIATION-EMITTING RESIN COMPOSITION**

(30) Priority: 21.01.2025 JP 2025008380
(71) Applicant: Firbest CO., Ltd., Tokyo 103-0014 (JP)
(72) Inventor: Kikuta, Shunichi, Tokyo, 103-0014 (JP); Higa, Yuuki, Tokyo, 103-0014 (JP)
(74) Representative: Canzler & Bergmeier Patentanwälte Partnerschaft mbB

(57) **Abstract**

Provided is an infrared radiation-emitting resin composition containing an infrared radiation-emitting material that has high emissivity and is capable of emitting uniform and stable radiation in a predetermined wavelength range. Disclosed is an infrared radiation-emitting resin composition containing an infrared radiation-emitting material and a resin, in which the infrared radiation-emitting material contains conductive carbon black and gold nanoparticles, and a mass ratio of the conductive carbon black to the gold nanoparticles in the infrared radiation-emitting material is 99.95:0.05 to 99.999:0.001.

## Description

### TECHNICAL FIELD

The present invention relates to an infrared radiation-emitting resin composition. More particularly, the present invention relates to an infrared radiation-emitting resin composition that may be utilized for drying various materials and imparting functionality such as heat retention to clothing and the like, as well as for heating and cooling, hairdressing and beauty treatment, and the like.

Regarding infrared radiation-emitting materials, ceramics containing alumina, titania, zirconia, silica, and the like have been conventionally proposed. Such materials emit infrared radiation, and when the infrared radiation is absorbed by a substance, the substance is heated up.

Water molecules undergo vibrational motion such as stretching and bending, and when water molecules absorb infrared radiation, they become excited and enter a high vibrational state. As a result, the temperature of the water molecules rises. Therefore, substances containing water molecules, human body, animals, plants, and the like rise in temperature when they absorb infrared radiation.

Therefore, in order to efficiently warm up substances containing water molecules, human body, animals, plants, and the like, it is necessary to use infrared radiation-emitting materials that emit infrared radiation with a wavelength that can excite the vibrational motion of water molecules. As such an infrared radiation-emitting material, the inventors of the present invention have proposed in Patent Document 1 an infrared radiation-emitting material which can emit infrared radiation that is easily absorbed by animals and plants, such as the human body.

### PRIOR ART DOCUMENT

### PATENT DOCUMENT

Patent Document 1: JP 2137667 B

### SUMMARY

When an infrared radiation-emitting material is applied to, for example, fibers used in clothing, the infrared radiation-emitting material is required to store heat by absorbing infrared radiation that is emitted from a human body wearing the clothing, and to emit the stored heat energy to the human body as infrared radiation. That is, an infrared radiation-emitting material is required to store heat by absorbing infrared radiation emitted from another substance, and to efficiently emit the stored heat energy as infrared radiation.

However, the infrared radiation-emitting material described in Patent Document 1 has a problem in that, for example, the infrared radiation-emitting material is not sufficiently efficient in absorbing infrared radiation emitted from a human body or the like and storing heat. As a result, when the stored heat energy is emitted as infrared radiation, the emission efficiency is not uniform in the wavelength range (for example, 4 to 20 µm) that is easily absorbed by animals and plants, such as the human body, and there is a problem in that the absorption and emission of infrared radiation by animals and plants, such as the human body, is insufficient.

The present invention has been achieved in view of such circumstances, and it is an object of the invention to provide an infrared radiation-emitting resin composition containing an infrared radiation-emitting material that has high emissivity and is capable of emitting uniform and stable radiation in a predetermined wavelength range.

### MEANS FOR SOLVING THE OBJECTS

From the above, embodiments of the present invention are as follows.
[1] An infrared radiation-emitting resin composition containing an infrared radiation-emitting material and a resin,
   wherein the infrared radiation-emitting material contains conductive carbon black and gold nanoparticles, and
   a mass ratio of the conductive carbon black to the gold nanoparticles in the infrared radiation-emitting material is 99.95:0.05 to 99.999:0.001.
[2] The infrared radiation-emitting resin composition according to [1], wherein the conductive carbon black has an average particle size of 10 nm or more and 100 nm or less.
[3] The infrared radiation-emitting resin composition according to [1] or [2], wherein the gold nanoparticles are particles having an irregular shape.
[4] The infrared radiation-emitting resin composition according to any one of [1] to [3], wherein the gold nanoparticles are spike-shaped gold nanoparticles, and the gold nanoparticles have an average particle size of 10 nm or more and 700 nm or less.
[5] The infrared radiation-emitting resin composition according to any one of [1] to [3], wherein the gold nanoparticles are rod-shaped gold nanoparticles, and the gold nanoparticles have an average diameter of 10 nm or more and 50 nm or less and an average length of 20 nm or more and 250 nm or less.
[6] The infrared radiation-emitting resin composition according to any one of [1] to [5], wherein the infrared radiation-emitting resin composition is in the form of a plate, a tube, or a sheet, and the infrared radiation-emitting material is dispersed in the resin.
[7] The infrared radiation-emitting resin composition according to any one of [1] to [5], wherein the infrared radiation-emitting resin composition is in a fibrous form, and the infrared radiation-emitting material is dispersed in the resin.
[8] The infrared radiation-emitting resin composition according to [6], wherein a content of the infrared radiation-emitting material is 5 parts by mass or more and 20 parts by mass or less with respect to 100 parts by mass of the resin.
[9] The infrared radiation-emitting resin composition according to [7], wherein a content of the infrared radiation-emitting material is 0.5 parts by mass or more and 2 parts by mass or less with respect to 100 parts by mass of the resin.

According to the present invention, an infrared radiation-emitting resin composition containing an infrared radiation-emitting material that has high emissivity and is capable of emitting uniform and stable radiation in a predetermined wavelength range, can be provided.

### BRIEF DESCRIPTION OF THE DRAWINGS

FIG. 1 is a graph showing the infrared emissivity of a blank sample at wavelengths of 5 to 20 µm;
FIG. 2 is a graph showing the infrared emissivity of samples of Examples A-1 to A-3 at wavelengths of 5 to 20 µm;
FIG. 3 is a graph showing the infrared emissivity of samples of Comparative Examples B-1 to B-4 at wavelengths of 5 to 20 µm;
FIG. 4 is a graph showing the body surface temperatures of the back before wearing plain stitch T-shirts of Example AMF-1, Comparative Example BMF-1, and Blank L-1 and after wearing the T-shirts for 20 minutes; and
FIG. 5 is a graph showing the changes in temperature in nonwoven fabric sheets of Example NWA-1, Comparative Example NWB-1, and Blank BL-1 up to 350 seconds after heating the nonwoven fabric sheets.

### DETAILED DESCRIPTION

Hereinafter, the present invention will be described in detail in the following order based on specific embodiments.
1. Infrared emitting resin composition
   1.1. Infrared emitting material
   1.2. Conductive carbon black
   1.3. Gold nanoparticles
2. Method for producing infrared radiation-emitting resin composition

### (1. Infrared radiation-emitting resin composition)

The infrared radiation-emitting resin composition according to the embodiments has an infrared radiation-emitting material and a resin. It is preferable that the infrared radiation-emitting material is in a powdered form, and it is preferable that the infrared radiation-emitting material powder is dispersed in the resin in the infrared radiation-emitting resin composition. The infrared radiation-emitting material will be described below.

Regarding the resin, any known resin can be used according to the use application of the infrared radiation-emitting resin composition. Examples of the known resin include thermoplastic resins such as polyester, polyethylene, polypropylene, polystyrene, polycarbonate, polyurethane, acrylic, nylon, polylactic acid-based resin, and epoxy resin; thermosetting resins such as melamine resin and urea resin; rubbers such as natural rubber and synthetic rubber; and regenerated resins such as rayon. In the present embodiment, polyolefins such as polypropylene and polyethylene; polyesters such as polyethylene terephthalate; nylon; and the like are suitably used.

The infrared radiation-emitting resin composition is used after being molded into various shapes according to the use application. In the present embodiment, the infrared radiation-emitting resin composition is preferably in the form of a plate, a tube, or a sheet or in a fibrous form, and is more preferably in a fibrous form. In a fibrous infrared radiation-emitting resin composition, an infrared radiation-emitting material is dispersed in a fibrous resin.

The fibrous infrared radiation-emitting resin composition is fiberized by a spinning process. Such a fiber is a chemical fiber artificially produced using a chemical technique. Chemical fibers include fibers other than natural fibers, and examples thereof include synthetic fibers (polyester-based and polyamide-based fibers), semi-synthetic fibers (cellulose-based fibers), and regenerated fibers (cellulose-based fibers).

The blending ratio between the infrared radiation-emitting material and the resin may be set according to the use application. In the present embodiment, in a case where the infrared radiation-emitting resin composition is in the form of a plate, a tube, or a sheet, it is preferable that the content of the infrared radiation-emitting material is 5 parts by mass or more and 20 parts by mass or less with respect to 100 parts by mass of the resin. Furthermore, in a case where the infrared radiation-emitting resin composition is in a fibrous form, it is preferable that the content of the infrared radiation-emitting material is 0.5 parts by mass or more and 2.0 parts by mass or less with respect to 100 parts by mass of the resin.

### (1.1. Infrared radiation-emitting material)

An infrared radiation-emitting material is a material that emits infrared radiation. In the present embodiment, the infrared radiation-emitting material is particularly preferably a material that emits infrared radiation having a wavelength suitable for exciting water molecules contained in substances, human body, animals, plants, and the like. Furthermore, this infrared radiation-emitting material is preferably a material having high infrared emissivity at wavelengths within the range of 5 µm to 20 µm, and particularly preferably within the range of 7 µm to 14 µm. The infrared emissivity can be measured using a Fourier Transform Infrared Spectroscopy (FTIR) based on, for example, a measurement method certified by the Japan Far-Infrared Rays Association.

In the present embodiment, the infrared radiation-emitting material contains conductive carbon black and gold nanoparticles. Furthermore, in the infrared radiation-emitting material, the mass ratio of the conductive carbon black to the gold nanoparticles is 99.95:0.05 to 99.999:0.001.

When the mass ratio of the conductive carbon black to the gold nanoparticles is within the above-described range, the absorption of infrared radiant heat energy and the emissivity of the infrared radiation-emitting material can be increased. Therefore, the infrared emissivity of the infrared radiation-emitting material according to the present embodiment can be increased, and in addition, the infrared emissivity can be made uniform at wavelengths within the range of 5 µm to 20 µm.

The mass ratio of the conductive carbon black to the gold nanoparticles is preferably 99.98:0.02 to 99.998:0.002.

### (1.2. Conductive carbon black)

Carbon black is an aggregate of substantially pure fine carbon particles. The smallest unit of aggregate of carbon black is a net plane (plate) in which about 30 to 40 six-membered carbon rings are bonded together in a two-dimensional pattern. As these net planes are stacked at approximately equal intervals in 3 to 5 layers, crystallites are formed. Then, 1000 to 2000 crystallites gather to form one primary particle. Moreover, as several dozens of primary particles gather and chemically and physically bind to each other, secondary particles are formed. The size of particle linkages in the secondary particle is referred to as structure, and the structure affects the physical properties of carbon black.

The carbon black contained in the infrared radiation-emitting material according to the present embodiment is conductive carbon black. The conductivity shown by conductive carbon black is exhibited when π (pi) electrons on the six-membered carbon rings migrate across the particle surface to form conductive paths. In particular, high- structured carbon black which has a wide and large secondary structure of the structure and a wide and large network structure in the medium, exhibits excellent conductive performance.

The method for producing the conductive carbon black is not particularly limited, and any known method for producing carbon black can be employed. Examples of the known method include an oil furnace method, an acetylene method, and a gasification method. For example, in the oil furnace method, a hydrocarbon raw material is subjected to pyrolysis using the heat of combustion of oil or gas to produce carbon black. In the acetylene method, acetylene is subjected to pyrolysis to produce carbon black. In the gasification method, carbon black is produced by utilizing a gasification process of heavy oil.

In the present embodiment, the average particle size of the primary particles of the conductive carbon black is preferably 10 nm or more and 100 nm or less, and more preferably 15 nm or more and 70 nm or less. In the present embodiment, the average particle size of primary particles of carbon black is a value calculated from the arithmetic mean diameter obtained by observing the primary particles with an electron microscope.

Examples of commercially available products of the conductive carbon black include Mitsubishi Carbon Black "#3230B" manufactured by Mitsubishi Chemical Corporation, Mitsubishi Carbon Black "#3030B" manufactured by Mitsubishi Chemical Corporation, "DENKA BLACK" (powdered product) manufactured by Denka Co., Ltd., and "KETJEN BLACK EC600JD" manufactured by Lion Specialty Chemicals Co., Ltd.

### (1.3. Gold nanoparticles)

Gold nanoparticles are aggregates of fine gold particles having a particle size of 1 to 1000 nm. On the surface of a gold nanoparticle, light having a specific wavelength in the light irradiated onto the particle interacts with electrons on the surface of the particle, and a collective electron oscillation phenomenon referred to as surface plasmon resonance (SPR) occurs.

The wavelength of the interacting light varies depending on the shape of the gold nanoparticles. This is attributable to the anisotropic (non-uniform) distribution of the surface electron layer of the gold nanoparticles. For example, spherical gold nanoparticles have a maximum absorption for light having a wavelength of 515 to 570 nm. On the other hand, gold nanoparticles having an irregular shape other than a spherical shape have a red shift in the absorption wavelength to the longer wavelength side compared to spherical gold nanoparticles and have a maximum absorption in the infrared region. This enhances the electromagnetic field generated by surface plasmons, resulting in stronger absorption and emission of light. As a result, the infrared emissivity is increased. Therefore, in the present embodiment, it is preferable that the gold nanoparticles are gold nanoparticles having an irregular shape. Furthermore, it is preferable that the gold nanoparticles having an irregular shape are not modified on the surface.

Examples of the gold nanoparticles having an irregular shape include bar-shaped (rod-shaped) gold nanoparticles (gold nanorods) and spike-shaped gold nanoparticles (gold nanourchins and gold nanostars).

Regarding the size of the gold nanorods, the diameter (minor axis diameter) is preferably 10 nm or more and 50 nm or less, and more preferably 10 nm or more and 40 nm or less. The length (major axis diameter) is preferably 20 nm or more and 250 nm or less, and more preferably 60 nm or more and 180 nm or less. Furthermore, the aspect ratio of the gold nanorods is preferably 2 or more and 5 or less, and more preferably 3 or more and 4 or less. In the present embodiment, the diameter and the length are values measured by a laser diffraction method.

Regarding the size of the gold nanourchins, the average particle size is preferably 10 nm or more and 700 nm or less, more preferably 15 nm or more and 650 nm or less, and even more preferably 20 nm or more and 600 nm or less. The average particle size is a value measured by a laser diffraction method.

Examples of commercially available products of the gold nanoparticles having an irregular shape include "Gold Nanorods A 12-10-2100" manufactured by Nanopartz, Inc., "Gold Nanorods A12-25-1400" manufactured by Nanopartz, Inc., and "Gold Nanourchin GU-100" manufactured by Cytodiagnostics, Inc.

### (2. Method for producing infrared radiation-emitting resin composition)

The infrared radiation-emitting resin composition according to the present embodiment is obtained as a mixture by mixing a resin and an infrared radiation-emitting material. It is preferable that in the mixture, the infrared radiation-emitting material is dispersed in the resin. It is desirable that the infrared radiation-emitting material is uniformly dispersed in the resin at the nanometer level to the micrometer level. This dispersibility increases the infrared emissivity and reduces energy loss.

Mixing of the resin and the infrared radiation-emitting material is carried out by, for example, melt kneading the resin and the infrared radiation-emitting material using a known kneading machine. Examples of the known kneading machine include a mixer, a kneader, a roll, and an extruder. Furthermore, the mixture of the resin and the infrared radiation-emitting material may be obtained by producing a masterbatch containing a high concentration of the infrared radiation-emitting material and kneading the masterbatch with the remaining resin raw material.

In the present embodiment, it is preferable that the obtained infrared radiation-emitting resin composition is molded into a predetermined shape according to the use application. Molding of the infrared radiation-emitting resin composition may be carried out simultaneously with the above-described mixing.

In a case where the infrared radiation-emitting resin composition is molded into a plate shape, a cylindrical shape, or a sheet shape, it is preferable to use a molding method such as injection molding, extrusion molding, T-die molding, or calender molding. Furthermore, in a case where the infrared radiation-emitting resin composition is molded into a fibrous form, it is preferable to use a spinning method such as melt spinning, dry spinning, wet spinning, or centrifugal spinning. The infrared radiation-emitting resin composition molded into a fibrous form is processed into, for example, a woven fabric, a knitted fabric, a nonwoven fabric, felt, or a punched sheet.

The infrared radiation-emitting resin composition can be used as clothing items, medical materials, construction materials, and vehicle interior materials, and it is particularly preferable that the infrared radiation-emitting resin composition is utilized as clothing and bedding for thermotherapy utilizing infrared radiation.

Although embodiments of the present invention have been described above, the present invention is not limited to the above-described embodiments and may be modified in various forms within the scope of the present invention.

### EXAMPLES

Hereinafter, the invention will be described in more detail using Examples; however, the present invention is not intended to be limited to these Examples.

### (Test 1)

As raw materials of infrared radiation-emitting materials, conductive carbon black (Mitsubishi Carbon Black "#3230B" manufactured by Mitsubishi Chemical Corporation) and gold nanoparticles ("Gold Nanourchin GU-100" manufactured by Cytodiagnostics, Inc. and "Gold Nanorod A12-10-2100" manufactured by Nanopartz, Inc.) were prepared. The average particle size of the primary particles of the conductive carbon black was 55 nm, the average particle size D50 of the gold nanourchins was 100 nm, and the average diameter and the average length of the gold nanorods were 110 nm and 175 nm, respectively.

The prepared conductive carbon black and gold nanoparticles were mixed at the blending ratios shown in Table 1 to obtain infrared radiation-emitting materials.

### [Table 1]

**Table 1**

| Infrared radiation-emitting material | | Example A-1 (mass ratio) | Example A-2 (mass ratio) | Example A-3 (mass ratio) | Comparative Example B-1 (mass ratio) | Comparative Example B-2 (mass ratio) | Comparative Example B-3 (mass ratio) | Comparative Example B-4 (mass ratio) |
|---|---|---|---|---|---|---|---|---|
| Conductive carbon black | | 99.998 | 99.99 | 99.995 | 99.9 | 99.5 | 100 | 0 |
| Gold nanoparticles | Gold nanourchins | 0.002 | 0 | 0.005 | 0.1 | 0 | 0 | 100 |
| | Gold nanorods | 0 | 0.01 | 0 | 0 | 0.5 | 0 | 0 |

The obtained infrared radiation-emitting material and a polyethylene resin were blended such that the ratio of the total mass of the conductive carbon black and the gold nanoparticles in the infrared radiation-emitting material to the mass of the polyethylene resin was 1:9, and then the blend was kneaded using a kneading machine ("Plasti-Corder Lab-Station W50EHT type" manufactured by Brabender GmbH & Co. KG) at a speed of rotation of 50 rpm and a resin temperature of 180°C for 10 minutes to obtain pellets.

The obtained pellets were subjected to heat pressing using a press molding machine (manufactured by Toho Press Seisakusho, Ltd.) under the conditions of a heating temperature of 200°C and a gauge pressure of 10 MPa, and a sheet-shaped infrared radiation-emitting resin composition having dimensions of 100 mm × 100 mm × 0.6 mm was obtained.

Incidentally, in Comparative Example B-4, the gold nanoparticles and the polyethylene resin were blended such that the mass ratio of the mass of the gold nanoparticles to the mass of the polyethylene resin was 0.05:99.95, and a sheet-shaped infrared radiation-emitting resin composition was obtained in the same manner as described above. Furthermore, in Comparative Example B-5, as a blank, a sheet-shaped resin composition composed only of the polyethylene resin without an infrared radiation-emitting material was obtained in the same manner as described above.

For the obtained infrared radiation-emitting resin compositions, the infrared spectral emissivity was measured as follows. A test specimen having dimensions of 40 mm × 40 mm was cut out from an obtained sheet-shaped infrared radiation-emitting resin composition, and the infrared spectral emissivity was measured in the infrared wavelength range (5 to 20 µm) by an FT-IR method using an infrared spectral emissivity measuring machine ("SpectrumOne Frontier T" manufactured by PerkinElmer, Inc.) under the conditions of a measurement temperature of 40°C, an ambient temperature of 20°C, and a humidity of 65%. Furthermore, the infrared spectral emissivity was measured also for the blank sample under the above-described conditions. The average emissivity of the blank in the infrared wavelength range (7 to 14 µm) was calculated from the measurement results, and the average emissivity was 86.1%.

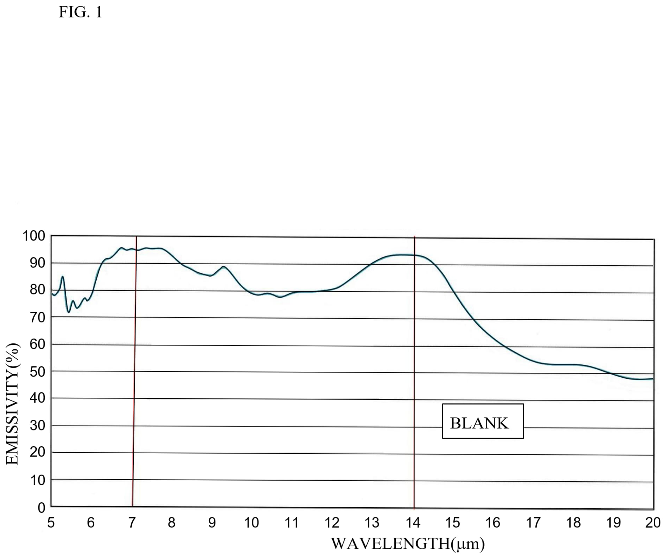

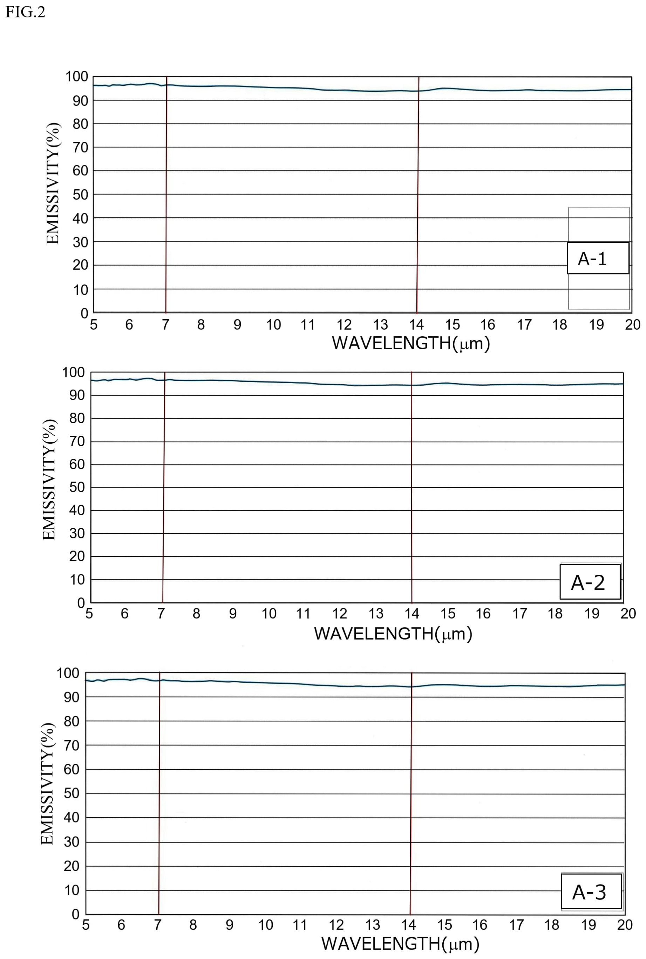

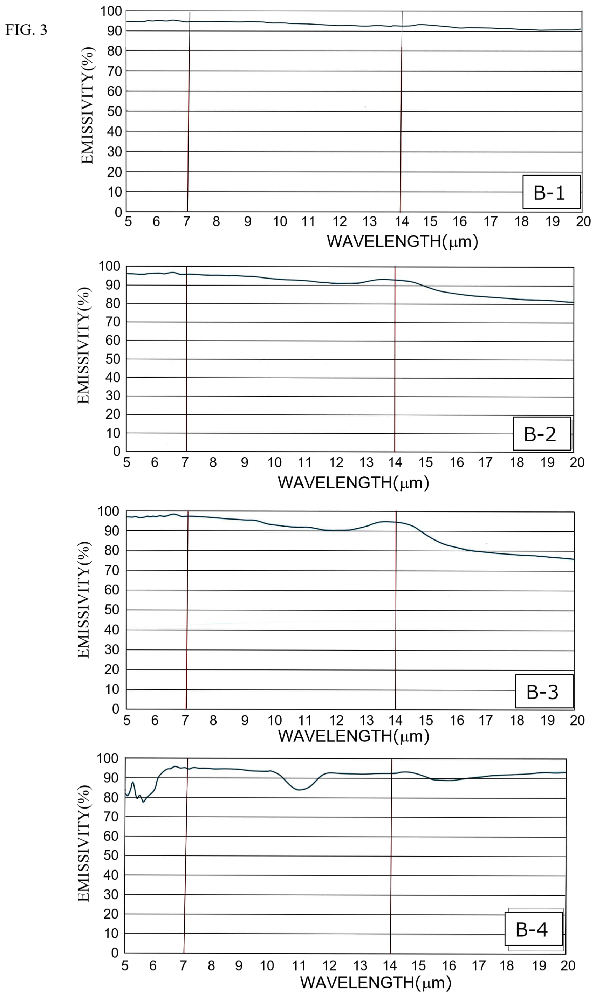

In the present Example, by taking into consideration the criteria for the evaluation item "radiation properties and spectral emissivity" in the "Infrared Fiber Product Evaluation Standards" defined by the Japan Far-Infrared Rays Association, samples having an average emissivity of 94.7% or higher in the infrared wavelength range (7 to 14 µm) were determined to be satisfactory. The results are shown in Table 2 and FIGS. 1 to 3.

### [Table 2]

**Table 2**

| Measurement range | Infrared spectral emissivity (%) | | | | | | | |
|---|---|---|---|---|---|---|---|---|
| | Blank B-5 | A-1 | A-2 | A-3 | B-1 | B-2 | B-3 | B-4 |
| 7µm | 96.0 | 96.3 | 96.6 | 96.8 | 94.9 | 96.3 | 97.4 | 95.1 |
| 8µm | 96.0 | 96.0 | 96.4 | 96.5 | 94.7 | 95.8 | 96.6 | 94.7 |
| 9µm | 84.0 | 96.0 | 96.4 | 96.4 | 94.7 | 95.3 | 95.4 | 94.2 |
| 10µm | 76.1 | 95.4 | 95.9 | 95.9 | 94.2 | 93.8 | 93.0 | 93.4 |
| 11µm | 77.5 | 94.9 | 95.3 | 95.3 | 93.7 | 91.8 | 91.9 | 84.2 |
| 12µm | 78.2 | 94.2 | 94.6 | 94.6 | 93.0 | 91.6 | 90.3 | 92.1 |
| 13µm | 88.0 | 93.9 | 94.4 | 94.4 | 92.8 | 92.3 | 92.4 | 92.5 |
| 14µm | 93.0 | 94.0 | 94.3 | 94.3 | 92.7 | 93.4 | 94.5 | 95.7 |
| Average value | 86.1 | 95.1 | 95.5 | 95.5 | 93.8 | 93.8 | 93.9 | 92.7 |

From Table 2 and FIGS. 1 to 3, it could be confirmed that when the infrared radiation-emitting material contains the above-mentioned components, and the contents thereof are within the above-mentioned ranges, infrared radiation-emitting resin compositions having high average emissivity and uniform emissivity are obtained.

### (Test 2)

As raw materials of infrared radiation-emitting materials, conductive carbon black (Mitsubishi Carbon Black "#3030B" manufactured by Mitsubishi Chemical Corporation) and gold nanoparticles ("Gold Nanorod A12-25-1400" manufactured by Nanopartz, Inc.) were prepared. The average particle size of the primary particles of the conductive carbon black was 55 nm, and the average diameter and the average length of the gold nanorods were 25 nm and 245 nm, respectively.

The prepared conductive carbon black and gold nanoparticles were mixed such that the mass ratio of the mass of the conductive carbon black to the mass of the gold nanoparticles was 99.99:0.01 to obtain an infrared radiation-emitting material. The infrared radiation-emitting material and a nylon resin were blended such that the mass ratio of the infrared radiation-emitting material to the nylon resin was 1:9, and then the blend was kneaded using a resin melt kneading apparatus ("50C Type 150" manufactured by Toyo Seiki Seisaku-sho, Ltd.) under the conditions of a heating temperature of 270°C and a speed of rotation of 100 rpm to produce masterbatch A3M-1.

Next, the obtained masterbatch A3M-1 and a nylon resin were blended such that the mass ratio of the masterbatch A3M-1 to the nylon resin was 1:9, and then the blend was subjected to melt spinning using a multifilament production apparatus (manufactured by Musashino Kikai Co., Ltd.) under the conditions of a heating temperature of 280°C to produce nylon multifilament yarn AMF-1 having a fineness of 88 dtex and a filament count of 36f.

The produced nylon multifilament yarn AMF-1 was subjected to a POY-DTY method (a method of spinning at high speed to perform partial drawing to obtain a partially oriented yarn (POY), and subjecting the POY to drawing and false twisting processes to obtain a draw textured yarn (DTY)) under the conditions of a false twisted POY drawing roller winding speed of 4,000 m/min, to produce a POY yarn. Then, the POY yarn was subjected to twisting at 3,200 t/m to produce a draw textured yarn DTY, and the DTY was heat set, subsequently untwisted, and processed into a highly bulky and stretchy yarn.

The processed AMF-1 was produced into a fabric using a circular knitting machine/plain stitchting machine (MXC-S3.2 manufactured by Precision Fukuhara Works, Ltd.), and a plain stitch T-shirt (AMF-1) was produced.

Nylon multifilament yarn BMF-1 was produced in the same manner as described above, except that an infrared radiation-emitting material obtained by blending conductive carbon black and gold nanoparticles such that the mass ratio of the mass of the conductive carbon black to the mass of the gold nanoparticles was 99.92:0.08 was used. Then a plain stitch T-shirt (BMF-1) was produced by using the produced nylon multifilament yarn BMF-1.

In addition, nylon multifilament yarn L-1 was produced in the same manner as described above, except that a resin composition composed of a nylon resin without containing an infrared radiation-emitting material was used, and a plain stitch T-shirt (L-1) was produced by using the produced nylon multifilament yarn L-1.

According to the test method described below, subjects wore the obtained plain stitch T-shirts and measured their body surface temperatures after undressing, and thereby the heat retention properties of the plain stitch T-shirts were evaluated.

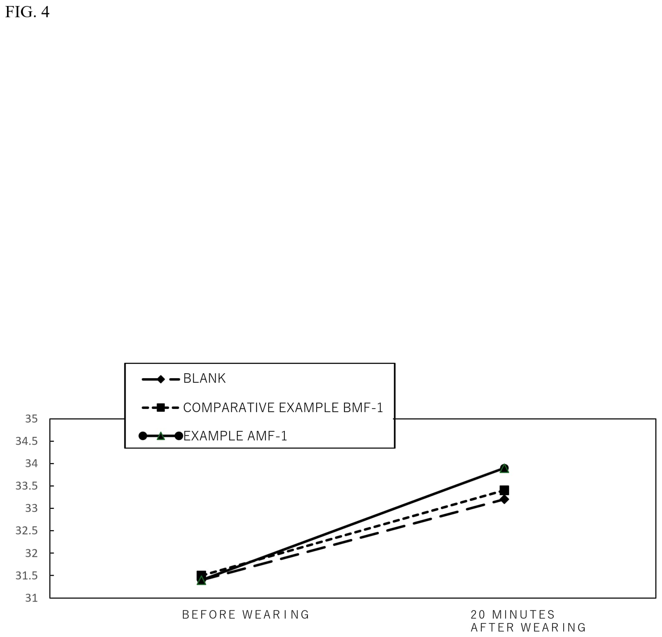

Each subject entered the laboratory, which was maintained at an indoor temperature of 20°C and an indoor humidity of 65%, maintained a resting state in a seated position, and measured the body surface temperature of a measurement site (back) using thermography (FLIR A615 manufactured by FLIR Systems, Inc.). The body surface temperature when the temperature stabilized was recorded as the body surface temperature before wearing. After the checking, the subject wore a plain stitch T-shirt produced as described above, maintained a resting state in a seated position, and took off the plain stitch T-shirt after 20 minutes. The body surface temperature of the back was measured immediately after undressing, using thermography ("FLIR A615" manufactured by FLIR Systems, Inc.). The results are shown in Table 3 and FIG. 4.

### [Table 3]

**Table 3**

| | Blank L-1 | Comparative Example BMF-1 | Example AMF-1 |
|---|---|---|---|
| | Body surface temperature (°C) | Body surface temperature (°C) | Body surface temperature (°C) |
| Before wearing | 31.4 | 31.5 | 31.4 |
| Immediately after undressing after wearing for 20 minutes | 33.2 | 33.4 | 33.9 |

From Table 3 and FIG. 4, it could be confirmed that the plain stitch T-shirt (AMF-1) has high heat retention properties.

### (Test 3)

As raw materials of infrared radiation-emitting materials, conductive carbon black (Mitsubishi Carbon Black "#3230B" manufactured by Mitsubishi Chemical Corporation) and gold nanoparticles ("Gold Nanourchin GU-100" manufactured by Cytodiagnostics, Inc.) were prepared. The average particle size of the primary particles of the conductive carbon black was 23 nm, and the average particle size D50 of the gold nanourchins was 100 nm.

The prepared conductive carbon black and gold nanoparticles were blended such that the mass ratio of the mass of the conductive carbon black to the mass of the gold nanoparticles was 99.995:0.005 to obtain an infrared radiation-emitting material (the same blend as in Example A-3). This infrared radiation-emitting material and a polyethylene terephthalate (PET) resin were blended such that the mass ratio of the infrared radiation-emitting material to the polyethylene terephthalate (PET) resin was 1:9, and then the blend was kneaded using a resin melt kneading apparatus ("50C Type 150" manufactured by Toyo Seiki Seisaku-sho, Ltd.) under the conditions of a heating temperature of 280°C and a speed of rotation of 100 rpm to produce masterbatch AN-1.

Next, the obtained masterbatch AN-1 and a PET resin were blended such that the mass ratio of the masterbatch AN-1 to the PET resin was 1:9, and then the blend was subjected to melt spinning using a short fiber spinning and drawing production apparatus under the conditions of a heating temperature of 280°C to produce PET resin staple yarn STA-1 having a fineness of 6.6 dtex and a fiber length of 51 mm.

The produced staple yarn STA-1 was used as a raw material to form a web using a carding machine ("H2DS" manufactured by Ikegami Kikai K.K.). The formed web was stacked in multiple layers using a layering machine ("IK30-2" manufactured by Ikegami Kikai K.K.), and the stacked webs were processed using a nonwoven fabric needle punching machine ("NL21" manufactured by Fehrer Enterprise Corporation) to produce PET nonwoven fabric NWA-1 having a width of 1000 mm and a fabric thickness of 100 g/m².

PET resin staple yarn STB-1 was produced in the same manner as described above, except that an infrared radiation-emitting material obtained by blending conductive carbon black and gold nanourchins such that the mass ratio of the mass of the conductive carbon black to the mass of the gold nanourchins was 99.5:0.5, was used, and the produced staple yarn STB-1 was used to produce PET nonwoven fabric NWB-1.

In addition, PET resin staple yarn BL-1 was produced in the same manner as described above, except that a resin composition composed of a PET resin without containing an infrared radiation-emitting material was used, and the produced staple yarn BL-1 was used to produce PET nonwoven fabric BL-1.

The changes in temperature when the produced PET nonwoven fabrics were heated were measured as follows.

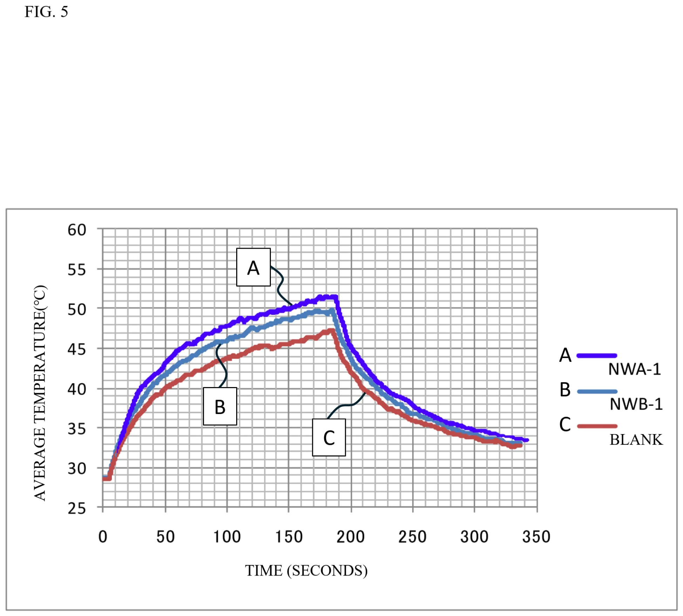

A test specimen having dimensions of 200 mm × 150 mm was cut out from the obtained PET nonwoven fabrics. The cut test specimen was heated from an obliquely upper direction with respect to the test specimen using two halogen lamps ("CHP-500" manufactured by CASTER Corporation) arranged to face each other with the test specimen disposed therebetween, and the average temperature of the test specimen (PET nonwoven fabric) was measured from the start of heating up to 180 seconds. The power output of the halogen lamps was 500 W. The average temperature of the test specimen was measured from above the test specimen, by detecting the spectrum in the range of 7.5 to 14 µm using an infrared camera ("FLIR SC665" manufactured by FLIR Systems, Inc.). The results are shown in Table 4 and FIG. 5.

### [Table 4]

**Table 4**

| | Average temperature of nonwoven fabric after start of heating (°C) | | | | | Difference from blank after 180 seconds |
|---|---|---|---|---|---|---|
| | 0 seconds | 50 seconds | 100 seconds | 150 seconds | 180 seconds | |
| NWA-1 (Same blend as in Example A-3) | 28.5°C | 43.1°C | 48.2°C | 50.2°C | 51.8°C | 4.8°C |
| NWB-1 | 28.5°C | 41.8°C | 46°C | 48.7°C | 49.4°C | 2.4°C |
| BL-1 (Blank) | 28.5°C | 40.0°C | 43.5°C | 45.4°C | 47.0°C | |

From Table 4 and FIG. 5, it could be confirmed that the heat energy emitted from the PET nonwoven fabric NWA-1 was high.

### (Test 4)

The plain stitch T-shirt (AMF-1) and the plain stitch T-shirt (Blank L-1) obtained in (Test 3) were worn alternately by two male and two female subjects, a total of four subjects, and blood flow rate data were measured by the following method in the case where the subjects wore the plain stitch T-shirt (AMF-1) and in the case where the subjects wore the plain stitch T-shirt (Blank L-1).

A blood flow meter (manufactured by Omegawave, Ltd., laser blood flow meter OMEGAFLO-Lab) having a contact type probe and capable of continuously measuring subcutaneous microcirculation, was used as the blood flow meter to measure the tissue blood flow rate (mL/min/100 g) at a depth of about 1 mm from the subcutaneous surface. Regarding the measurement site, the abdominal skin surface covered by the plain stitch T-shirt was taken as the measurement site, a probe was fixed to this measurement site, and the blood flow rate was measured every second for 30 minutes (1800 seconds) at a room temperature of 25°C and a humidity of 50%. A t-test was performed on each measurement result, and from the results, it was determined that in a case where the one-tailed P (T <= t) value was less than the significance level (0.05), there was a statistically significant increase in the blood flow rate when the subject was wearing the AMF-1 as compared to the blood flow rate when the subject was wearing the L-1. The results are shown in Table 5.

Furthermore, the ratio of change between the average blood flow rate when the subject was wearing the plain stitch T-shirt (AMF-1) and the average blood flow rate when the subject was wearing the plain stitch T-shirt (Blank L-1) was calculated as follows. First, the difference between the average blood flow rate when the subject was wearing the plain stitch T-shirt (AMF-1) and the average blood flow rate when the subject was wearing the plain stitch T-shirt (Blank L-1) ("Average blood flow rate when wearing plain stitch T-shirt (AMF-1)" - "average blood flow rate when wearing plain stitch T-shirt (Blank L-1)") was calculated, and the ratio of change was calculated by the expression "(Difference in average blood flow rate / average blood flow rate when wearing plain stitch T-shirt (Blank L-1)) × 100". The results are shown in Table 5.

### [Table 5]

**Table 5**

| | Parameter | Average value of blood flow rate (mL/min/100g) | Difference of average values | Dispersion | Number of samples | t | P(T<=t) one-tailed | t Boundary value one-tailed | Null hypothesis | P(T<=t) two-tailed | t Boundary value two-tailed | Null hypothesis | Ratio of change (%) |
|---|---|---|---|---|---|---|---|---|---|---|---|---|---|
| Subject A (male) | Blood flow rate when wearing AMF-1 | 10.186 | 0.696 | 2.277 | 1802 | 14.933 | 6.295E-48 | 1.646 | Rejected | 1.259E-47 | 1.961 | Rejected | 7.33 |
| | Blood flow rate when wearing L-1 | 9.490 | | 1.626 | 1802 | | | | | | | | |
| Subject B (female) | Blood flow rate when wearing AMF-1 | 5.915 | 0.444 | 3.787 | 1802 | 8.571 | 1.084E-17 | 1.646 | Rejected | 2.168E-17 | 1.961 | Rejected | 8.11 |
| | Blood flow rate when wearing L-1 | 5.471 | | 1.298 | 1802 | | | | | | | | |
| Subject C (male) | Blood flow rate when wearing AMF-1 | 7.961 | 0.468 | 23.474 | 1802 | 4.103 | 2.131E-05 | 1.646 | Rejected | 4.262E-05 | 1.961 | Rejected | 6.24 |
| | Blood flow rate when wearing L-1 | 7.493 | | 0.134 | 1802 | | | | | | | | |
| Subject D (female) | Blood flow rate when wearing AMF-1 | 7.238 | 0.878 | 0.341 | 1802 | 40.225 | 2.757E-253 | 1.646 | Rejected | 5.515E-253 | 1.961 | Rejected | 13.81 |
| | Blood flow rate when wearing L-1 | 6.360 | | 0.651 | 1802 | | | | | | | | |

From Table 5, it could be confirmed that from the results of a t-test on the average blood flow rate when the subject was wearing the plain stitch T-shirt (AMF-1) and the average blood flow rate when the subject was wearing the plain stitch T-shirt (Blank L-1), there was a statistically significant increase in the blood flow rate when the subject was wearing the plain stitch T-shirt (AMF-1) as compared to the case where the subject was wearing the plain stitch T-shirt (Blank L-1). Furthermore, in accordance with the blood flow rate improvement regulations for garments for household far-infrared blood circulation promotion, which are Class 1 medical devices approved by the Ministry of Health, Labor, and Welfare, it could be confirmed that the ratio of change in the average blood flow rates of the subjects was 5% or more.

The infrared radiation-emitting resin composition according to the present invention contains an infrared radiation-emitting material having a high average value of emissivity in a predetermined wavelength range and is therefore suitable as a material for fibers used in clothing and the like that require heat retention properties and for drying various materials.

## Claims

1. An infrared radiation-emitting resin composition comprising an infrared radiation-emitting material and a resin,
wherein the infrared radiation-emitting material contains conductive carbon black and gold nanoparticles, and
a mass ratio of the conductive carbon black and the gold nanoparticles in the infrared radiation-emitting material is 99.95:0.05 to 99.999:0.001.

2. The infrared radiation-emitting resin composition according to claim 1, wherein the conductive carbon black has an average particle size of 10 nm or more and 100 nm or less.

3. The infrared radiation-emitting resin composition according to claim 1 or 2, wherein the gold nanoparticles are particles having an irregular shape.

4. The infrared radiation-emitting resin composition according to any one of claims 1 to 3, wherein the gold nanoparticles are spike-shaped gold nanoparticles, and the gold nanoparticles have an average particle size of 10 nm or more and 700 nm or less.

5. The infrared radiation-emitting resin composition according to any one of claims 1 to 3, wherein the gold nanoparticles are rod-shaped gold nanoparticles, and the gold nanoparticles have an average diameter of 10 nm or more and 50 nm or less and an average length of 20 nm or more and 250 nm or less.

6. The infrared radiation-emitting resin composition according to any one of claims 1 to 5, wherein the infrared radiation-emitting resin composition is in a form of a plate, a tube, or a sheet, and the infrared radiation-emitting material is dispersed in the resin.

7. The infrared radiation-emitting resin composition according to any one of claims 1 to 5, wherein the infrared radiation-emitting resin composition is in a fibrous form, and the infrared radiation-emitting material is dispersed in the resin.

8. The infrared radiation-emitting resin composition according to claim 6, wherein a content of the infrared radiation-emitting material is 5 parts by mass or more and 20 parts by mass or less with respect to 100 parts by mass of the resin.

9. The infrared radiation-emitting resin composition according to claim 7, wherein a content of the infrared radiation-emitting material is 0.5 parts by mass or more and 2 parts by mass or less with respect to 100 parts by mass of the resin.
